# EUROPÄISCHE PATENTSCHRIFT

(11) **EP 1 421 322 B1**
(45) Veröffentlichungstag und Bekanntmachung des Hinweises auf die Patenterteilung: **26.10.2011**
(21) Anmeldenummer: 02794777.9
(22) Anmeldetag: 12.08.2002
(51) Int. Cl.: F25B 5/00

(54) **KOMBINATIONS-KÄLTEGERÄT UND VERDAMPFERANORDNUNG DAFÜR**
COMBINED REFRIGERATING APPLIANCE AND EVAPORATING SYSTEM THEREFOR
DISPOSITIF REFRIGERANT COMBINE ET SYSTEME D'EVAPORATION CORRESPONDANT

(30) Priorität: 16.08.2001 DE 10140005
(43) Veröffentlichungstag der Anmeldung: 26.05.2004
(73) Patentinhaber: BSH Bosch und Siemens Hausgeräte GmbH, 81739 München (DE)
(72) Erfinder: NUIDING, Wolfgang, 89537 Giengen (DE)
(86) Internationale Anmeldenummer: PCT/EP2002/009014
(87) Internationale Veröffentlichungsnummer: WO 2003/016793

(56) Entgegenhaltungen:
- DE-A- 4 242 776
- DE-A- 19 756 860
- DE-C- 667 528
- US-A- 1 900 510
- US-A- 4 741 178
- PATENT ABSTRACTS OF JAPAN vol. 2000, no. 23, 10. Februar 2001 (2001-02-10) -& JP 2001 167341 A (KUBOTA CORP), 22. Juni 2001 (2001-06-22)

## Beschreibung

Die vorliegende Erfindung betrifft ein Kältegerät mit wenigstens drei Kühlzonen nach dem Oberbegriff des Anspruchs 1 und eine Verdampferanordnung für ein solches Kältegerät.

Ein derartiges Kältegerät ist aus US-A-4 741 178 bekannt.

Dieses bekannte Kältegerät weist zwei Ventileinheiten auf, die im Kältemittelkreislauf angeordnet sind und ansteuerbar sind, um einen Kältemittelfluss nur durch einen einer als Gefrierfach bezeichneten ersten Kühlzone zugeordneten Verdampfer oder nacheinander durch den einer als Normalkühlfach bezeichneten zweiten Kühlzone zugeordneten Verdampfer und den Gefrierfachverdampfer oder durch einen einer dritten, als Kellerfach bezeichneten Kühlzone zugeordneten Verdampfer und den Gefrierfachverdampfer zu leiten. D.h. das Kältegerät weist drei Betriebsarten auf, eine erste, in der nur das Gefrierfach gekühlt wird, eine zweite, in der das Normalkühlfach und das Gefrierfach gemeinsam gekühlt werden, und eine dritte, in der Kellerfach und Gefrierfach gemeinsam gekühlt werden. Die Laufzeiten in den drei Betriebsarten können sich erheblich unterscheiden. Da im allgemeinen das Kellerfach eine im Vergleich zu den anderen Fächern relativ schwache Isolation und einen kleinen Verdampfer aufweist, kann die Betriebszeit in der dritten Betriebsart die in der zweiten deutlich überschreiten. Dies führt zu einer hohen Gesamtbetriebsdauer der Kältemaschine des Kühlgeräts und dadurch zu einem hohen Energieverbrauch und zu einer tieferen Temperatur des Gefrierfachs als nötig.

Die Druckschrift DE-A-4 242 776 offenbart ein Kältegerät mit mehreren Verdampfern, welche in Serie verbunden und einzeln in Kühlkammern angeordnet sind.

Die Druckschrift JP 2001167341 offenbart ein Kältegerät mit mehreren in Serie geschalteten Verdampfern.

Aufgabe der Erfindung ist, ein Kühlgerät und eine Verdampferanordnung für ein Kältegerät anzugeben, die es erlauben, die Betriebszeit in der dritten Betriebsart zu reduzieren und so eine Unterkühlung des Gefrierfachs zu vermeiden und den Energieverbrauch des Kühlgeräts zu verringern.

Die Aufgabe wird gelöst durch ein Kühlgerät mit den Merkmalen des Anspruchs 1 bzw. eine Verdampferanordnung für ein solches Kühlgerät mit den Merkmalen des Anspruchs 5.

Indem im zweiten Zweig des Kältemittelkreises des Kältegeräts die Verdampfer aller drei Kühlzonen in Reihe verbunden sind bzw. die Anschlüsse an der Verdampferanordnung so platziert werden, dass sich zwischen zweien der Anschlüsse eine Reihenschaltung der drei Verdampfer erstreckt, wird erreicht, dass die dritte Kühlzone, das Kellerfach, auch dann mitgekühlt wird, wenn der Kältemittelstrom über die zweite Kühlzone, das Normalkühlfach geleitet wird. Das Kellerfach wird so beim Kühlen des Normallagerfachs laufend mitgekühlt, so dass die zum Einhalten der Solltemperatur des Kellerfachs erforderliche Laufzeit in der dritten Betriebsart und damit auch die Gesamtkühlzeit des Gefrierfachs reduziert ist.

Um andererseits nun eine übermäßige Kühlung des Kellerfachs auf Kosten des Gefrierfaches zu vermeiden, kann zweckmäßigerweise vorgesehen werden, dass der zweite Zweig des Kältemittelkreises sich nur über einen Teil der Fläche des Verdampfers des Kellerfachs erstreckt. Wie groß dieser Teil sein muss, um eine angemessene Kühlung in allen Kühlzonen bei minimalem Energieaufwand zu erreichen, hängt von den Flächen der einzelnen Verdampfer bzw. von deren Kühlleistungen sowie von der Güte der Isolierung der einzelnen Temperaturzonen ab. Es kann daher keine allgemein gültige Regel für die Größe dieses Teils der Fläche angegeben werden, ein geeigneter Wert ist jedoch ohne Schwierigkeiten per Experiment optimierbar.

Der Verdampfer der zweiten Kühlzone kann im zweiten Zweig zwischen den Verdampfern der ersten und der dritten Kühlzone angeordnet sein, so dass er von bereits teilweise verdampftem Kältemittel durchströmt wird, während die maximale Kühlleistung pro Flächeneinheit des Verdampfers in derjenigen Kühlzone anfällt, die von dem Kältemittel noch im vollständig flüssigen Zustand durchströmt wird.

Zweckmäßigerweise weist der Kältemittelkreis ferner einen dritten Zweig auf, der nur den Verdampfer der ersten Kühlzone umfasst und der von einem Schaltelement ausgeht. Dieser dritte Zweig kann genutzt werden, wenn die Kühlleistung, die die erste Kühlzone über den ersten oder den zweiten Zweig erreicht, nicht ausreicht, um deren Solltemperatur aufrechtzuerhalten.

In diesem Fall kann es zweckmäßig sein, dass der erste und der zweite Zweig sich jeweils nur über einen Teil der Fläche des Verdampfers der ersten Kühlzone erstrecken. Wenn auf diese Weise sichergestellt ist, dass die Kühlleistung, die der erste und der zweite Zweig in der ersten Kühlzone entfalten, zur Einhaltung von deren Solltemperatur knapp nicht ausreicht, so dass gelegentlich ein Betrieb des dritten Zweiges erforderlich ist, ist eine Unterkühlung der ersten Temperaturzone und die damit einhergehende Energieverschwendung ausgeschlossen.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine perspektivische Ansicht eines Haushalts-Kühlgeräts mit drei Temperaturzonen, an dem die vorliegende Erfindung anwendbar ist;
- Fig. 2: in vereinfachter, schematischer Darstellung die Kälteanlage des Kühlgeräts aus Fig. 1; und
- Figs. 3 und 4: Beispiele von Verdampferanordnungen für das erfindungsgemäße Kühlgerät.

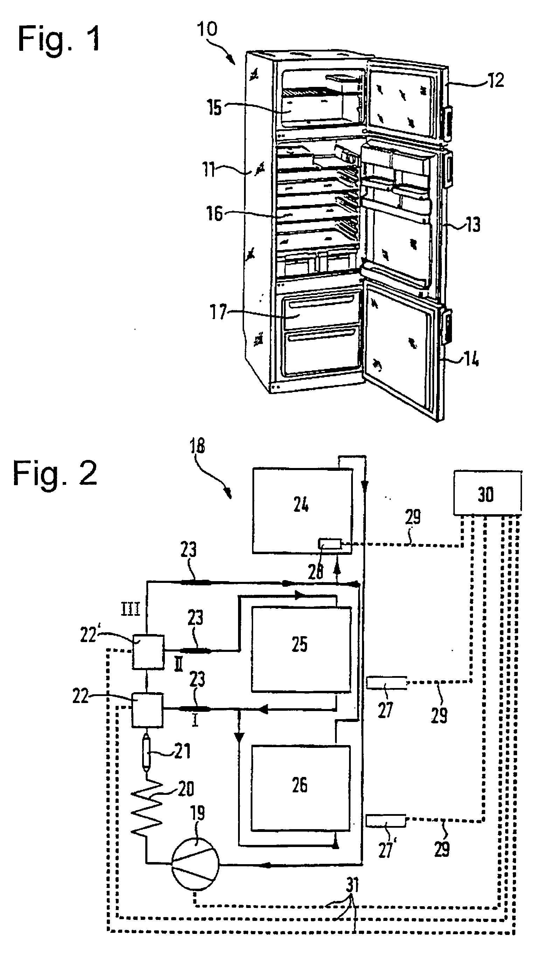

Fig. 1 zeigt eine perspektivische Ansicht eines Haushalts-Kühlgeräts 10, dessen wärmeisoliertes Gehäuse 11 an seiner Öffnung mit am Öffnungsrand angeschlagenen und separat zu öffnenden Türen 12 - 14 versehen ist. Durch die Türen 12 - 14 sind drei im Innenraum des Gehäuses 11 übereinander angeordnete und durch Zwischenwände von einander thermisch getrennte Fächer verschließbar, die Kühlzonen 15 - 17 für unterschiedliche Lagertemperaturen bilden. Die obere, mit der Tür 12 verschließbare Kühlzone stellt ein Gefrierfach dar, die mittlere Zone 16, der die Tür 13 zugeordnet ist, dient als Normalkühlfach, während die unten liegende Zone 17 als Kellerfach ausgebildet und mit der Tür 14 verschließbar ist. Die unterschiedlichen Lagertemperaturen in den einzelnen Zonen werden mit Hilfe der im folgenden erläuterten Kälteanlage aufrechterhalten.

Die in Fig. 2 schematisch gezeigte Kälteanlage 18 weist einen Kältemittelverdichter 19 auf, dem druckseitig ein Verflüssiger 20 nachgeschaltet ist. An den Ausgang des Verflüssigers 20 schließt eine Trocknerpatrone 21 an, deren Ausgang mit dem Eingang einer ersten Ventileinheit 22 verbunden ist, die als elektromagnetisch betriebenes 3/2-WegeVentil-ausgebildet ist. Ein erster Ausgang dieser Ventileinheit ist an einen Eingang eines Verdampfers 26 angeschlossen, der im Kellerfach 17 des Kühlgeräts angeordnet ist. Ein zweiter Ausgang der Ventileinheit 22 ist an einen Eingang einer gleichartigen zweiten Ventileinheit 22' angeschlossen, deren zwei Ausgänge jeweils mit einem Eingang eines Verdampfers 25 des Normalkühlfachs 16 bzw. eines Verdampfers 24 des Gefrierfachs 15 verbunden sind. Zwischen dem Eingang eines der Verdampfer 24, 25, 26 und dem zugeordneten Ausgang einer Ventileinheit 22 ist jeweils ein spiralenartig aufgewickeltes, als Kapillarrohr ausgebildetes Drosselorgan 23 in Reihe geschaltet.

Der Ausgang des Verdampfers 25 ist mit einer Verbindungsleitung zwischen dem Eingang des Verdampfers 26 und dem ihm zugeordneten Drosselorgan 23 verbunden; in analoger Weise ist der Ausgang des Verdampfers 26 mit dem Eingang des Verdampfers 24 verbunden.

Der Kältemittelkreis weist somit drei Zweige auf, die in der Fig. mit I - III bezeichnet sind. Alle drei Zweige verlaufen durch den Verdampfer 24, der dem Gefrierfach 15 zugeordnet ist. Der Zweig I führt das Kältemittel zuvor durch den Verdampfer 26 des Kellerfachs 17; der Zweig II stellt eine Reiheschaltung aller drei Verdampfer in der Reihenfolge 25, 26, 24 dar.

Jedem Fach 15, 16, 17 ist ein Temperaturfühler 27, 27' bzw. 28 zugeordnet, wobei es sich, wie in der Fig. schematisch angedeutet, im Falle des Kühlfachs 16 und des Kellerfachs 17 um einen darin frei angeordneten Lufttemperaturfühler 27, 27' handeln kann, während im Falle des Gefrierfachs 15 der Fühler 28 an der Oberfläche des Verdampfers 24 angeordnet ist.

Eine Regleranordnung 30 steuert anhand der ihr von den Fühlern 27, 27', 28 über Signalleitungen 29 zugeführten Messsignale den Betrieb des Verdichters 19 sowie die Schaltstellung der Ventileinheiten 22, 22'.

Anhand des Messsignals des Lufttemperaturfühlers 27 des Normalkühlfachs 16 steuert die Regelanordnung 30 den Kältemittelfluss durch den Zweig II, so dass die Temperatur im Normalkühlfach 16 in einem vom Benutzer vorgegebenen Sollbereich liegt. Wenn Kältemittel durch diesen Kreis fließt, werden neben dem Normalkühlfach 16 auch das Kellerfach 17 und das Gefrierfach 15 mitgekühlt. Die Kühlleistungen der einzelnen Verdampfer 24, 25, 26 sind so bemessen, dass die Kühlleistung der Verdampfer 24, 26 nicht genügt, um beim anhand des Messsignals des Fühlers 27 thermostatgeregelten Betrieb des Zweigs II den Kältebedarf ihrer Fächer 15, 17 zu decken.

Wenn einer der Temperaturfühler 27', 28 Kältebedarf feststellt, der Fühler 27 aber nicht, so betreibt die Regelanordnung 30 die Kälteanlage jeweils in der Schaltstellung der Ventileinheiten 22, 22'für den Zweig I bzw. III.

Wenn der Lufttemperaturfühler 27 des Normalkühlfachs 16 und einer der Lufttemperaturfühler 28, 27' gleichzeitig Kühlbedarf feststellen, so kann vorgesehen werden, dass die Regelanordnung 30 das Erfassungsergebnis des Lufttemperaturfühlers 28 oder 27' so lange ignoriert, bis der Lufttemperaturfühler 27 keinen Kältebedarf mehr meldet. D.h. es werden so lange alle drei Fächer gekühlt, bis das Normalkühlfach 16 Solltemperatur erreicht hat, und anschließend wird je nach Bedarf über einen der Zweige I, III weitergekühlt. Alternativ kann vorgesehen werden, dass die Regelanordnung 30 in einem solchen Fall auch die Abweichung der vom Lufttemperaturfühler 28 oder 27' erfassten Temperatur von der Solltemperatur für das betreffende Fach 15 oder 17 berücksichtigt, und dass sie, wenn die Abweichung der gemessenen Temperatur von der Solltemperatur für das betreffende Fach größer ist als im Falle des Lufttemperaturfühlers 27, zeitweilig auf den Zweig I oder III wechselt, je nach dem ob die zu hohe Temperatur im Kellerfach 17 oder im Gefrierfach 15 vorliegt, und anschließend wieder den Zweig II einstellt, wenn diese übermäßige Temperaturabweichung behoben ist.

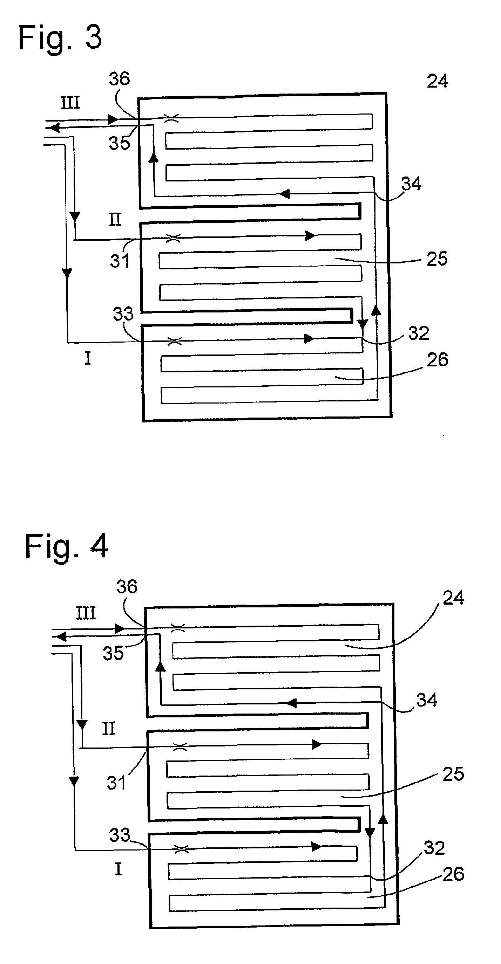

Fig. 3 zeigt in einer schematischen Darstellung ein erstes Beispiel einer Verdampferanordnung für das mit Bezug auf Figs. 1 und 2 beschriebene Kühlgerät. Die Verdampferanordnung umfasst die bereits erwähnten Verdampfer 24, 25, 26, die hier auf einer gemeinsamen Trägerplatte ausgebildet dargestellt sind, die aber auch jeweils als getrennte Bauteile ausgebildet sein könnten.

Der Zweig II tritt an einem Eingang 31 in den Verdampfer 25 des Normalfachs ein und verläuft mäanderartig über im wesentlichen dessen gesamte Fläche zu einem Verbindungspunkt 32 auf dem Verdampfer 26 des Kellerfachs. An diesem Punkt 32 vereinigt sich die vom Verdampfer 25 kommende Leitung mit dem Zweig I, der über einen Eingangsanschluss 33 in den Verdampfer 26 eintritt, und verläuft von dort aus im wesentlichen über die gesamte Fläche des Verdampfers 26. Schließlich erreicht die Leitung einen Verbindungspunkt 34 auf dem Verdampfer 24 des Gefrierfachs und verläuft von dort aus zu einem Ausgang 35, über den das Kältemittel zum Verdichter 19 zurückgeführt wird.

Die Leitung zwischen dem Verbindungspunkt 34 und dem Ausgang 35 kühlt nur einen Teil der Fläche des Verdampfers 24, die restliche Fläche wird eingenommen von einer Leitung, die von einem Eingang 36 des Verdampfers 24 zu dem Verbindungspunkt 34 verläuft und zum Zweig III gehört. Durch geeignete Wahl der Lage des Verbindungspunkts 34 auf dem Verdampfer 24 kann man festlegen, wie groß der Anteil der Fläche des Verdampfers 24 ist, der auch den Zweigen I und II angehört und folglich mit dem Normalkühlfach 16 und dem Kellerfach 17 mitgekühlt wird. Auf diese Weise läßt sich die Kühlleistung im Gefrierfach 15 beim Betrieb der Zweige I und II konstruktionsmäßig begrenzen und die Gefahr einer Unterkühlung des Gefrierfachs beschränken.

Die Verdampferanordnung der Fig. 4 unterscheidet sich von der aus Fig. 3 durch die Lage des ersten Verbindungspunkts 32. Dieser ist im Falle der Fig. 4 etwa auf halber Länge der Kältemittelleitung des Verdampfers 26 angeordnet, so dass nur beim Betrieb des Zweiges I der Verdampfer 26 des Kellerfachs auf seiner ganzen Fläche gekühlt wird, beim Betrieb des Zweiges II hingegen nur etwa zur Hälfte. Es gelten hier die gleichen Überlegungen, wie mit Bezug auf Fig. 3 für den Verdampfer 24 des Gefrierfachs dargelegt: Durch eine geeignete Positionierung des Verbindungspunktes 32 kann man die Kühlleistung des Verdampfers 26 beim Betrieb des Zweiges II begrenzen und so verhindern, dass es beim Betrieb des Kreises II zu einer Unterkühlung des Kellerfachs kommen kann. Eine solche Gefahr könnte sich andernfalls ergeben, wenn das Kältegerät bei niedrigen Umgebungstemperaturen betrieben wird.

## Patentansprüche

1. Kältegerät (10) mit wenigstens einer ersten (15), einer zweiten (16) und einer dritten Kühlzone (17) für eine tiefe, eine mittlere bzw. eine hohe Lagertemperatur, von denen jede einen Verdampfer (24, 25, 26) aufweist, einem Verdichter (19), einem Kältemittelkreis zum Zuführen von entspanntem Kältemittel zu den Verdampfern (24, 25, 26) und zum Rückführen von entspanntem Kältemittel zum Verdichter (19), und mit wenigstens einem Schaltelement (22, 22') zum wahlweisen Leiten des Kältemittels durch einen von zwei Zweigen (I, II) des Kältemittelkreises, wobei im ersten Zweig (I) die Verdampfer (24, 26) der ersten und der dritten Kühlzone (15, 17) in Reihe verbunden sind, wobei im zweiten Zweig (II) die Verdampfer (24, 25, 26) aller drei Kühlzonen (15, 16, 17) in Reihe verbunden sind, **dadurch gekennzeichnet, dass** der zweite Zweig (II) sich nur über einen Teil der Fläche des Verdampfers (26) der dritten Kühlzone (17) erstreckt.

2. Kältegerät nach Anspruch 1 oder 2, **dadurch gekennzeichnet, dass** der Verdampfer (25) der zweiten Kühlzone (16) im zweiten Zweig (II) zwischen den Verdampfern (24, 26) der ersten und der dritten Kühlzone (15, 17) angeordnet ist.

3. Kältegerät nach einem der vorhergehenden Ansprüche, **dadurch gekennzeichnet, dass** der Kältemittelkreis einen dritten Zweig (III) aufweist, der nur den Verdampfer (24) der ersten Kühlzone (15) umfasst und von dem Schaltelement (22') ausgeht.

4. Kältegerät nach Anspruch 4, **dadurch gekennzeichnet, dass** der erste und der zweite Zweig (I, II) sich nur über einen Teil der Fläche des Verdampfers (24) der ersten Kühlzone (15) erstrecken.

5. Verdampferanordnung für ein Kältegerät nach einem der vorhergehenden Ansprüche, mit drei miteinander verbundenen Verdampfern (24, 25, 26) und wenigstens drei Anschlüssen (31, 33, 35), **dadurch gekennzeichnet, dass** sich zwischen zweien der Anschlüsse (31, 35) eine Reihenschaltung der drei Verdampfer (24, 25, 26) erstreckt.

## Claims

1. Refrigerating appliance (10) with at least one first cooling zone (15), second cooling zone (16) and third cooling zone (17) respectively for a low, medium and high storage temperature, each of which has an evaporator (24, 25, 26), a compressor (19), a refrigerant circuit for the feed of expanded refrigerant to the evaporators (24, 25, 26) and for the return of expanded refrigerant to the compressor (19), and with at least one switching element (22, 22') for selectable conducting of the refrigerant through one of two branches (I, II) of the refrigerant circuit, wherein in the first branch (I) the evaporators (24, 26) of the first and third cooling zones (15, 17) are connected in series, and wherein in the second branch (II) the evaporators (24, 25, 26) of all three cooling zones (15, 16, 17) are connected in series, **characterised in that** the second branch (II) extends only over a part of the area of the evaporator (26) of the third cooling zone (17).

2. Refrigerating appliance according to claim 1 or 2, **characterised in that** the evaporator (25) of the second cooling zone (16) is arranged in the second branch (II) between the evaporators (24, 26) of the first and third cooling zones (15, 17).

3. Refrigerating appliance according to one of the preceding claims, **characterised in that** the refrigerant circuit has a third branch (III) which comprises only the evaporator (24) of the first cooling zone (15) and goes out from the switching element (22').

4. Refrigerating appliance according to claim 4, **characterised in that** the first and the second branches (I, II) extend only over a part of the area of the evaporator (24) of the first cooling zone (15).

5. Evaporator arrangement for a refrigerating appliance according to any one of the preceding claims, with three interconnected evaporators (24, 25, 26) and at least three connections (31, 33, 35), **characterised in that** a series connection of the three evaporators (24, 25, 26) extends between two of the connections (31, 35).

## Revendications

1. Appareil frigorifique (10) comprenant au moins une première (15), une deuxième (16) et une troisième zone de refroidissement (17) pour une température de stockage basse, une moyenne resp. une température de stockage élevée, dont chacune présente un évaporateur (24, 25, 26), comprenant un condenseur (19), un circuit de réfrigérant destiné à amener du réfrigérant détendu vers les évaporateurs (24, 25, 26) et destiné à ramener du réfrigérant détendu vers le condenseur (19), et comprenant au moins un élément de commutation (22, 22') pour le guidage sélectif du réfrigérant à travers un de deux embranchements (I, II) du circuit de réfrigérant, les évaporateurs (24, 26) de la première et de la troisième zones de refroidissement (15, 17) étant reliés en série dans le premier embranchement (I), les évaporateurs (24, 25, 26) de toutes les trois zones de refroidissement (15, 16, 17) étant reliés en série dans le deuxième embranchement (II), **caractérisé en ce que** le deuxième embranchement (II) s'étend seulement sur une partie de la surface de l'évaporateur (26) de la troisième zone de refroidissement (17).

2. Appareil frigorifique selon la revendication 1, **caractérisé en ce que** l'évaporateur (25) de la deuxième zone de refroidissement (16) est disposé dans le deuxième embranchement (II) entre les évaporateurs (24, 26) de la première et de la troisième zones de refroidissement (15, 17).

3. Appareil frigorifique selon l'une quelconque des revendications précédentes, **caractérisé en ce que** le circuit de réfrigérant présente un troisième embranchement (III) qui comprend seulement l'évaporateur (24) de la première zone de refroidissement (15) et part de l'élément de commutation (22').

4. Appareil frigorifique selon la revendication 3, **caractérisé en ce que** le premier et le deuxième embranchements (I, II) s'étendent seulement sur une partie de la surface de l'évaporateur (24) de la première zone de refroidissement (15).

5. Dispositif d'évaporateurs pour un appareil frigorifique selon l'une quelconque des revendications précédentes, comprenant trois évaporateurs (24, 25, 26) reliés entre eux et au moins trois raccordements (31, 33, 35), **caractérisé en ce qu'**un montage en série des trois évaporateurs (24, 25, 26) s'étend entre deux des raccordements (31, 35).
